# EUROPEAN PATENT APPLICATION

(11) **EP 4 488 732 A2**
(43) Date of publication of application: **08.01.2025**
(21) Application number: 24213331.2
(22) Date of filing: 15.11.2024
(51) Int. Cl.: G02B 6/38

(54) **LC DUSTPROOF ADAPTER**

(30) Priority: 17.11.2023 CN 202323104573 U
(71) Applicant: Zhejiang Oryarwa Communication Equipment Co., Ltd, Wenzhou Zhejiang 325699 (CN)
(72) Inventor: TANG, Jianyong, Wenzhou 325699 (CN); CHEN, Zhongxu, Wenzhou 325699 (CN); LUO, Cong, Wenzhou 325699 (CN); LIN, Rongqian, Wenzhou 325699 (CN)
(74) Representative: Zaboliene, Reda

(57) **Abstract**

An LC dustproof adapter is disclosed in the present application, and the LC dustproof adapter of the present application has a smaller gap and better dustproof performance. The LC dustproof adapter includes a housing, a bushing disposed in an inner cavity of the housing and a ceramic sleeve disposed in the bushing, a dustproof mechanism is disposed in a socket of the housing, the dustproof mechanism comprises a shutter and a slider, the shutter rotatably is disposed at a bottom of the socket of the housing, the slider is slidably disposed at a top of the socket of the housing, the shutter is provided with a first elastic resetting member and the slider is provided with a second elastic resetting member, the shutter and the slider are mutually closed under action of the first elastic resetting member and the second elastic resetting member.

## Description

### FIELD

The present application relates to the field of communication technology, in particular to a fiber optic adapter.

### BACKGROUND

Fiber optic adapters are components used to achieve detachable (movable) connections between optical fibers. The fiber optic adapters may be divided into LC fiber optic adapters, FC fiber optic adapters, SC fiber optic adapters according to the type of connector. In order to prevent dust from entering the adapter, a shutter is installed in a socket of the adapter, a traditional shutter is usually a single shrapnel structure, and a gap between the shutter and the socket is large, which is not ideal for dust prevention.

Therefore, improvement is desired.

### SUMMARY OF THE DISCLOSURE

The purpose of the present application is to provide an LC dustproof adapter with smaller gap and better dust protection performance.

The LC dustproof adapter provided by the present application includes a housing, a bushing disposed in an inner cavity of the housing and a ceramic sleeve disposed in the bushing, a dustproof mechanism is disposed in a socket of the housing, the dustproof mechanism includes a shutter and a slider, the shutter rotatably is disposed at a bottom of the socket of the housing, the slider is slidably disposed at a top of the socket of the housing, the shutter is provided with a first elastic resetting member and the slider is provided with a second elastic resetting member, the shutter and the slider are mutually closed under action of the first elastic resetting member and the second elastic resetting member.

Optionally, the shutter is rotatably disposed in the socket of the housing through two rotating shafts at two ends of the shutter, the first elastic resetting member comprises an inner spring piece and a sealing cover, the inner spring piece includes an elastic piece installation plate, an elastic arm integrally formed in a middle of the elastic piece installation plate, and an inner buckle integrally formed on both sides of the elastic piece installation plate, the inner spring piece is installed on a small hanging table through the inner buckle, the elastic arm presses a back surface of the shutter, the sealing cover is installed outside the elastic piece installation plate, and the sealing cover is connected to the housing through two outer buckles at two sides.

Optionally, the slider is slidably disposed in two first guide rail grooves at a top of the socket of the housing through two first guide rails integrally formed at two sides of the slider, the second elastic resetting member is a spring, and the spring is abutted against a rear end of the slider.

Optionally, a clip is disposed on outer side of the housing, the clip comprises a first elastic claw, a second elastic claw and a third elastic claw arranged in a triangular shape, the first elastic claw and the second elastic claw are arranged side by side, an end portion of the first elastic claw is bent to form a first positioning portion and an end portion of the second elastic claw is bent to form a second positioning portion.

Optionally, a middle of the shutter defines an arc concave surface.

Optionally, the housing forms a duplex adapter, a quad adapter, a sextuplex adapter, an octuplex adapter or a dozen adapter.

Optionally, the bushing includes a first bushing and a second bushing, the first bushing is integrally molded into the housing, the second bushing is integrally molded into a front end of a partition plate, and the partition plate is inserted into an inner cavity of the housing and divides the inner cavity of the housing into two sockets.

Optionally, two ends of the partition plate are provided with a second guide rail and a third guide rail, the second guide rail and the third guide rail of the partition plate are respectively inserted into a second guide rail groove and a third guide rail groove of the inner cavity of the housing, the second guide rail and the third guide rail are respectively provided with a hook, and the second guide rail groove and the third guide rail groove are provided with a hanging groove which is hung with the hook.

Optionally, two positioning blocks are respectively disposed on two sides of an upper end of the partition plate, and the inner cavity of the housing defines two positioning grooves that cooperate with the two positioning blocks.

Optionally, the partition plate and the slider both define an installation hole.

The LC dustproof adapter of the present application has the following advantages: the dustproof mechanism is composed of a shutter and a slider, compared with the traditional single-shrapnel structure, the gap is smaller and the dustproof performance is better, there are elastic resetting members on the shutter and the slider respectively, which improves the reliability of opening and closing the dustproof mechanism.

### BRIEF DESCRIPTION OF THE DRAWINGS

Implementations of the present application will now be described, by way of embodiments, with reference to the attached figures.
FIG. 1 is a cross-sectional view of a first embodiment of an LC dustproof adapter of the present application.
FIG. 2 is an exploded view of the LC dustproof adapter shown in FIG. 1.
FIG. 3 is a schematic diagram of an inner spring piece shown in FIG. 2.
FIGS. 4 is a schematic diagram of a clip shown in FIG. 2.
FIGS. 5 is a schematic diagram of another clip of the present application.
FIG. 6 is a schematic diagram of a second bushing and a partition plate shown in FIG. 2.
FIG. 7 is a schematic diagram of a front of the housing shown in FIG. 2.
FIG. 8 is a schematic diagram of a back of the housing shown in FIG. 2.
FIG. 9 is a schematic diagram of a slider shown in FIG. 2.
FIG. 10 is a schematic diagram of an embodiment of a duplex LC dustproof adapter having a clip on the left and right sides of the duplex LC dustproof adapter according to the present application.
FIG. 11 is a schematic diagram of the duplex LC dustproof adapter shown in FIG. 10, having a clip on upper and lower sides of the duplex LC dustproof adapter according to the present application.
FIG. 12 is a schematic diagram of an embodiment of a quad LC dustproof adapter having a clip on left and right sides of a quad LC dustproof adapter according to the present application.
FIG. 13 is a schematic diagram of the quad LC dustproof adapter shown in FIG. 12, having a clip on upper and lower sides of the quad LC dustproof adapter according to the present application.
FIG. 14 is an exploded view of a second embodiment of an LC dustproof adapter of the present application.
FIG. 15 is a schematic diagram of a slider shown in FIG. 14.
FIG. 16 is a schematic diagram of a second bushing and a partition plate shown in FIG. 14.
FIG. 17 is a schematic diagram of a second embodiment of the LC dustproof adapter of the present application.
FIG. 18 is a schematic diagram of another embodiment of a clip of the present application.
FIG. 19 is a schematic diagram of another clip shown in FIG. 14.
FIG. 20 is a schematic diagram of a duplex LC dustproof adapter having a clip on left and right sides of the duplex LC dustproof adapter according to the present application.
FIG. 21 is a schematic diagram of the duplex LC dustproof adapter having a clip on upper and lower sides of the duplex LC dustproof adapter according to the present application.

### DETAILED DESCRIPTION

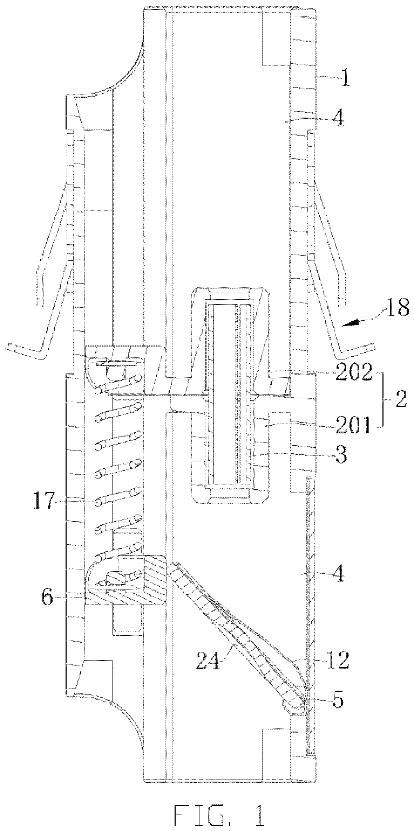

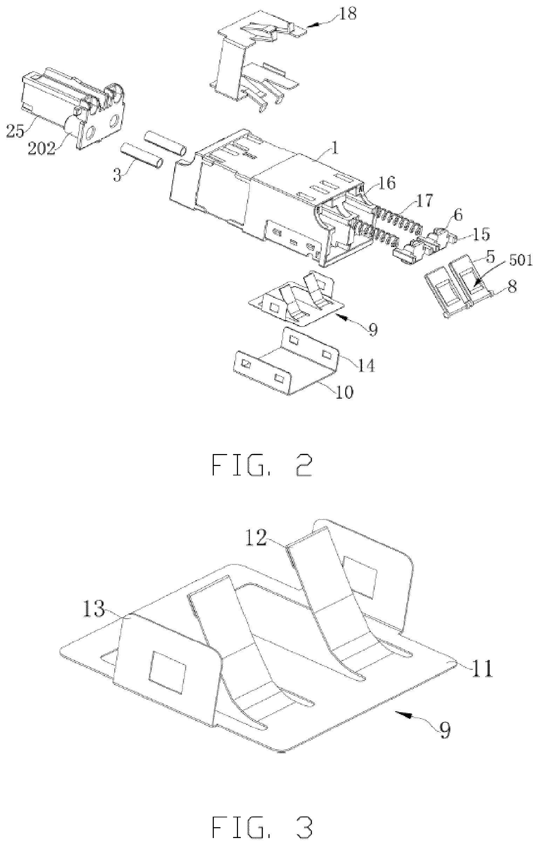

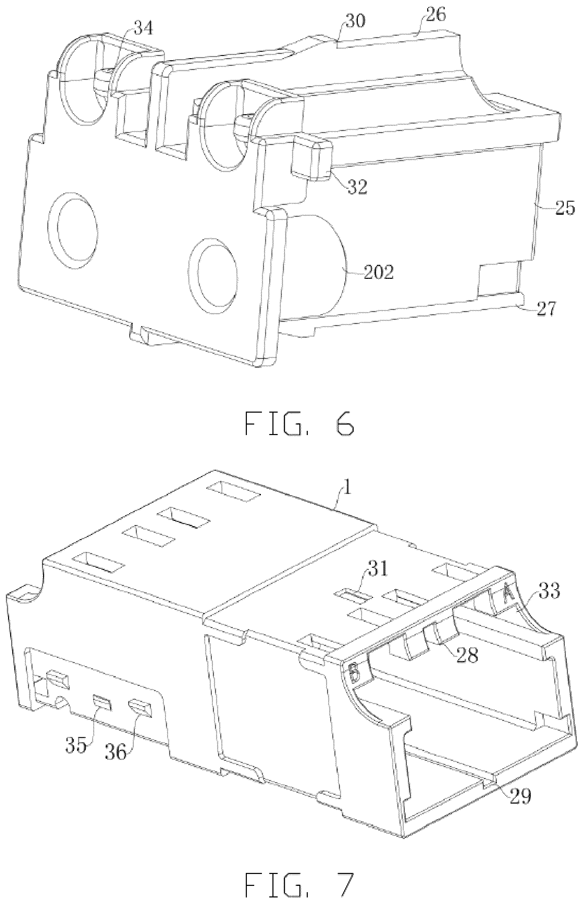

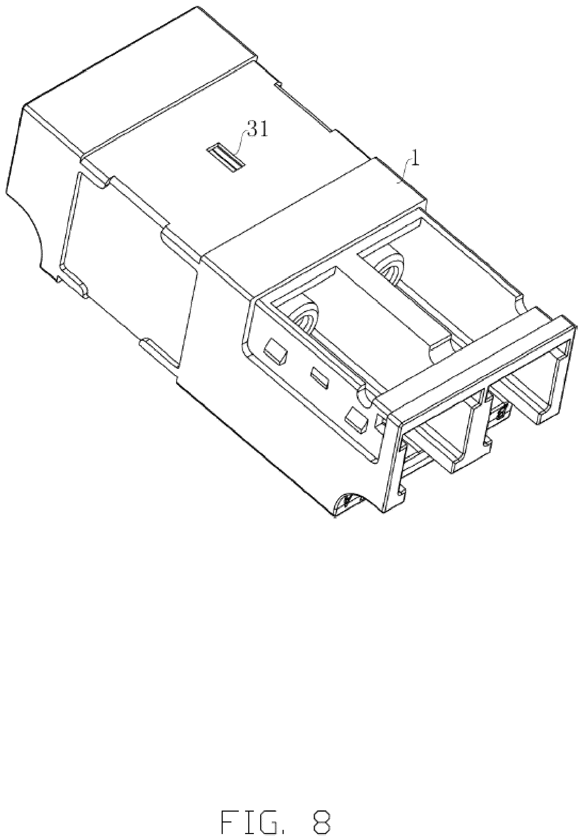

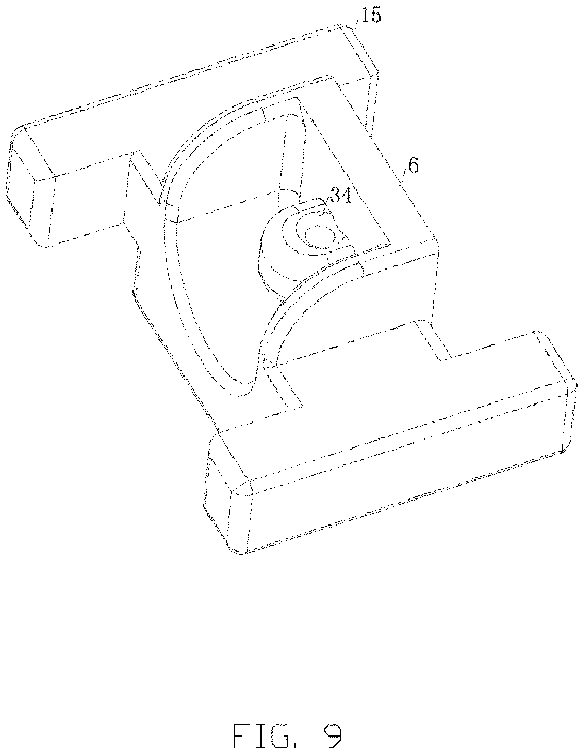

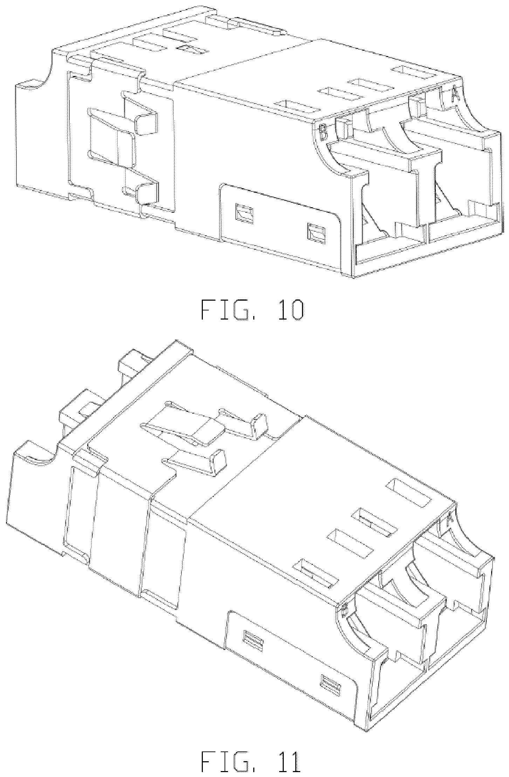

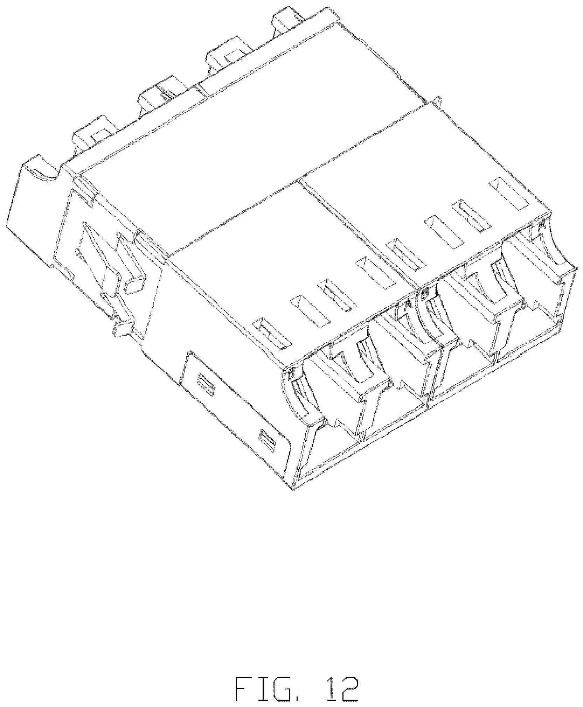

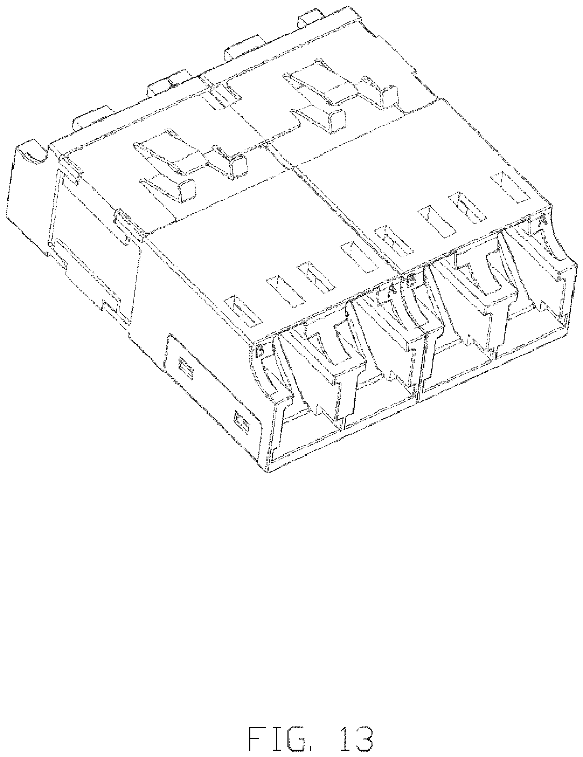

FIGS. 1 to 13 illustrate a lucent connector (LC) dustproof adapter in accordance with a first embodiment of the present application.

In the embodiment, the LC dustproof adapter includes a housing 1, a bushing 2 disposed in an inner cavity of the housing 1 and a ceramic sleeve 3 disposed in the bushing 2. The housing can form a duplex adapter, a quad adapter, a sextuplex adapter, an octuplex adapter, or a dozen adapter. A dustproof mechanism is disposed in a socket 4 at an outer end of the housing 1. The dustproof mechanism includes a shutter 5 and a slider 6, a lower end of the shutter 5 is rotatably disposed at a bottom of the socket 4 of the housing 1, the slider 6 is slidably disposed at a top of the socket 4 of the housing 1. The shutter 5 is provided with a first elastic resetting member and the slider 6 is provided with a second elastic resetting member, the shutter 5 and the slider 6 may be mutually closed under the action of the first elastic resetting member and the second elastic resetting member, and the shutter 5 is lapped at a bottom of the slider 6. In other words, the shutter 5 and the slider 6 can cooperate to form a closed space under the action of the first elastic resetting member and the second elastic resetting member, thereby achieving the dustproof effect.

Optionally, the shutter 5 is rotatably disposed in the socket 4 of the housing 1 through the rotating shafts 8 at two ends, and a shaft slot matched with the socket 4 is arranged in the socket 4. The first elastic resetting member includes an inner spring piece 9 and a sealing cover 10. The inner spring piece 9 includes an elastic piece installation plate 11, an elastic arm 12 integrally formed in a middle of the elastic piece installation plate 11, and an inner buckle 13 integrally formed on both sides of the elastic piece installation plate 11. The inner spring piece 9 is installed on a small hanging table 35 on the housing 1 through the inner buckle 13, the elastic arm 12 presses a back surface of the shutter 5, the sealing cover 10 is installed outside the elastic piece installation plate 11, and the sealing cover 10 is connected to a large hanging table 36 on the housing 1 through an outer buckle 14 at two sides. By adopting the above structure, the present application can realize the installation and fixation of the first elastic resetting member, and has the advantages of easy installation, stable and reliable structure.

Optionally, the slider 6 is slidably disposed in two first guide rail grooves 16 at the top of the socket 4 of the housing 1 through two first guide rails 15 integrally formed at two sides, which can realize reliable installation of the slider 6. The second elastic resetting member is a spring 17, and the spring 17 abuts against a rear end of the slider 6 to reset the slider 6.

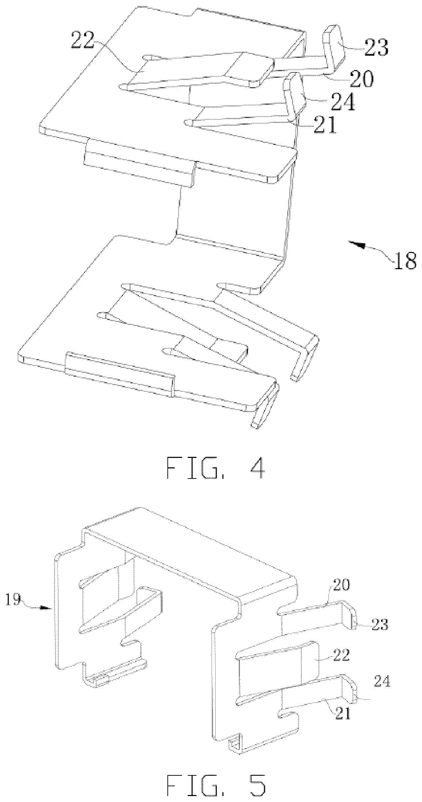

In an application scenario, a clip 18 may be disposed on the outer side of the housing 1, or a clip 19 may be disposed on the outer side of the housing 1. More specifically, as shown in FIGS. 4 and 5, the clips 18 and 19 both include a first elastic claw 20, a second elastic claw 21 and a third elastic claw 22 which are arranged in a triangular shape, the first elastic claw 20 and the second elastic claw 21 are arranged side by side, an end portion of the first elastic claw 20 is bent to form a positioning portion 23, and an end portion of the second elastic claw 21 is bent to form a positioning portion 24. The first elastic claw 20 and the second elastic claw 21 are supported on an inner wall of an installation opening of the adapter, and the third elastic claw 22 is supported on an outer wall of the installation opening of the adapter, so that the adapter may be stably installed in the installation opening of the adapter of the cabinet, and shaking is prevented. The clips 18 and 19 may be installed on the left and right sides of the housing 1 or the upper and lower sides of the housing 1 according to the actual situation. In other words, when the clip 18 is installed on the housing 1, the LC dust adapter is configured as an intensive adapter, when the clip 19 is installed on the housing 1, the LC dust adapter is configured as a SC Model adapter.

Optionally, the middle of the shutter 5 defines an arc concave surface501, which is used to make a shelter for the insert core and to protect the clean end surface of the insert core.

Optionally, the bushing 2 includes a first bushing 201 and a second bushing 202, the first bushing 201 is integrally molded into the housing 1, the second bushing 202 is integrally molded into a front end of a partition plate 25, the partition plate 25 is inserted into an inner cavity of the housing 1 and divides the inner cavity of the housing 1 into two sockets 4. By adopting the above structure, the housing 1 may be injection molded as a whole, thus making the overall structure of the adapter more stable and reliable.

Optionally, a second guide rail 26 and a third guide rail 27 at both ends of the partition plate 25 are respectively inserted into a second guide rail groove 28 and a third guide rail groove 29 of the inner cavity of the housing 1, the second guide rail 26 and the third guide rail 27 are respectively provided with a hook 30, and the second guide rail groove 28 and the third guide rail groove 29 are provided with a hanging groove 31 which is hung with the hook 30. By adopting the above structure, the partition plate 25 may be stably and conveniently disposed in the inner cavity of the housing 1. The two sides of the upper end of the partition plate 25 are provided with positioning blocks 32, and the inner cavity of the housing 1 defines positioning grooves 33 that cooperate with the positioning blocks 32, to further improve the stability of the partition plate 25 and prevent shaking.

Optionally, the partition plate 25 and the slider 6 both define an installation hole 34, and two ends of the spring 17 may be inserted into the installation hole 34 to improve the installation stability of the spring 17.

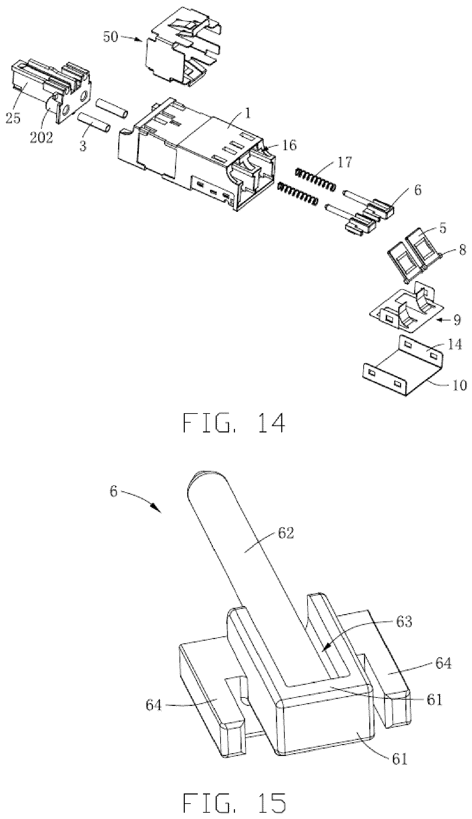

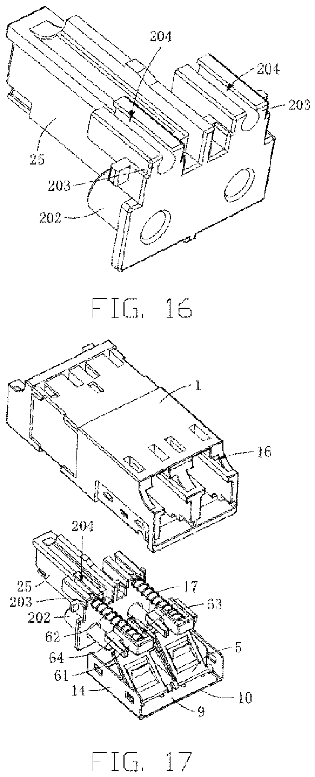

FIGS. 14 to 20 illustrate an LC dustproof adapter in accordance with a second embodiment of the present application.

The difference with the first embodiment illustrated in FIGS. 1 to 13 is that, in the embodiment, the slider 6 includes a base 61 and a cylinder 62, the base 61 defines an accommodate groove 63, at least a part of the cylinder 62 is accommodated in the accommodate groove 63, and a first end of the cylinder 62 is fixedly connected to the inner side of the end of the base 61. The slider 6 is slidably disposed in two first guide rail grooves 16 at the top of the socket 4 of the housing 1 through two first guide rails 64 integrally formed at two sides of the base 61.

In the embodiment, the upper portion of the second bushing 202 is provided with two limit portions 203, and the two limit portions 203 are respectively connected to both sides of the partition plate 25.

The limit portion 203 can be in the shape of a semicircle. The limit portion 203 defines a slide groove 204, a second end of the cylinder 62 is accommodated in the slide groove 204, and the cylinder 62 can slide in the slide groove 204.

Optionally, the spring 17 is sleeved on the cylinder 62, at least a part of the spring 17 is installed in the accommodate groove 63, and two ends of the spring 17 are respectively held between the inner side of the end of the base 61 and the end of the limit portion 203. When the slider 6 is slide in the first guide rail groove 16 at the top of the socket 4 of the housing 1, the spring 17 can be compressed or released.

In an application scenario, a clip 40 may be disposed on the outer side of the housing 1, or a clip 50 may be disposed on the outer side of the housing 1.

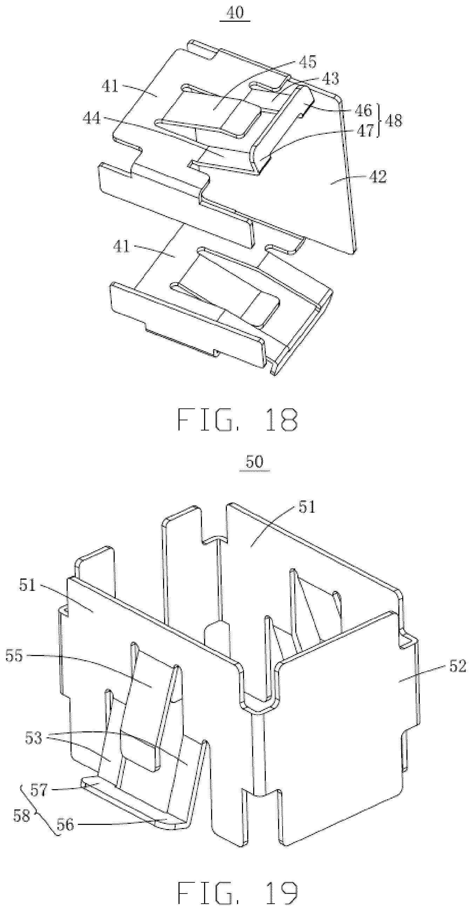

More specifically, as shown in FIG. 18, the clip 40 includes two buckle pieces 41 and a connection plate 42, and both ends of the connection plate 42 are fixedly connected to a buckle piece 41. Optionally, the buckle piece 41 can be vertically connected to one end of the connection plate 42, the two buckle pieces 41 are roughly parallel to each other, and there is a first distance d1 between the two buckle pieces 41.

Optionally, the buckle piece 41 includes a first elastic claw 43, a second elastic claw 44 and a third elastic claw 45 which are arranged in a triangular shape, the first elastic claw 43 and the second elastic claw 44 are arranged side by side, an end portion of the first elastic claw 43 is bent to form a bend portion 46, an end portion of the second elastic claw 44 is bent to form a bend portion 47, and the bend portion 46 is connected to the bend portion 47 to form a positioning portion 48. The first elastic claw 43 and the second elastic claw 44 are supported on an inner wall of an installation opening of the adapter, and the third elastic claw 45 is supported on an outer wall of the installation opening of the adapter, so that the adapter may be stably installed in the installation opening of the adapter of the cabinet, and shaking is prevented.

As shown in FIG. 19, the clip 50 includes two buckle pieces 51 and a connection plate 52, and both ends of the connection plate 52 are fixedly connected to a buckle piece 51. Optionally, the buckle piece 51 can be vertically connected to one end of the connection plate 52, and the two buckle pieces 51 are roughly parallel to each other, there is a second distance d2 between the two buckle pieces 51, and the first distance d1 is greater than the second distance d2.

Optionally, the buckle piece 51 includes a first elastic claw 53, a second elastic claw 54 and a third elastic claw 55 which are arranged in a triangular shape, the first elastic claw 53 and the second elastic claw 54 are arranged side by side, an end portion of the first elastic claw 53 is bent to form a bend portion 56, an end portion of the second elastic claw 54 is bent to form a bend portion 57, and the bend portion 56 is connected to the bend portion 57 to form a positioning portion 58. The first elastic claw 53 and the second elastic claw 54 are supported on an inner wall of an installation opening of the adapter, and the third elastic claw 55 is supported on an outer wall of the installation opening of the adapter, so that the adapter may be stably installed in the installation opening of the adapter of the cabinet, and shaking is prevented.

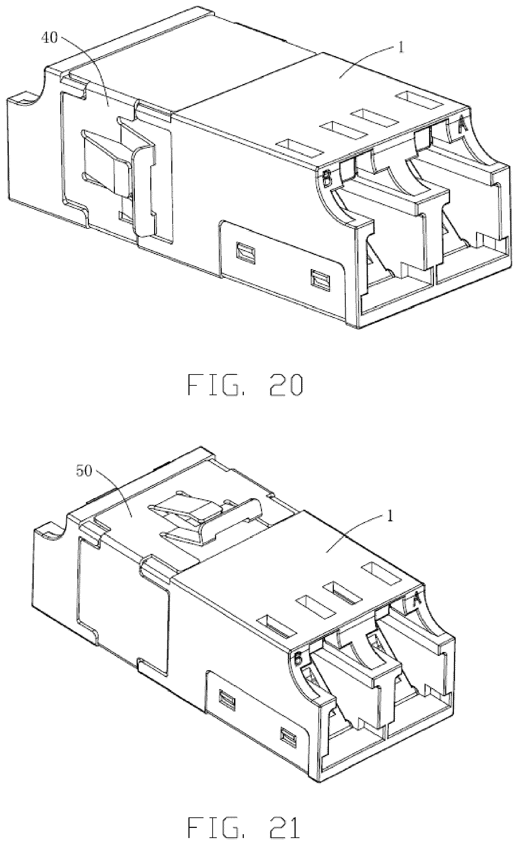

The clips 40 and 50 may be installed on the left and right sides of the housing 1 or the upper and lower sides of the housing 1 according to the actual situation. As shown in FIGS. 20 and 21, when the clip 50 is installed on the housing 1, the LC dust adapter is configured as an intensive adapter, when the clip 40 is installed on the housing 1, the LC dust adapter is configured as a SC Model adapter.

Even though numerous characteristics and advantages of the present technology have been set forth in the foregoing description, together with details of the structure and function of the present application, the application is illustrative only, and changes may be made in the detail, especially in matters of shape, size, and arrangement of the parts within the principles of the present application, up to and including the full extent established by the broad general meaning of the terms used in the claims. It will, therefore, be appreciated that the exemplary embodiments described above may be modified within the scope of the claims.

## Claims

1. An LC dustproof adapter comprising a housing (1), a bushing (2) disposed in an inner cavity of the housing (1) and a ceramic sleeve (3) disposed in the bushing (2), and a dustproof mechanism disposed in a socket (4) of the housing (1), the dustproof mechanism comprising a shutter (5) and a slider (6), wherein:
the shutter (5) rotatably is disposed at a bottom of the socket (4) of the housing (1); and
the slider (6) is slidably disposed at a top of the socket (4) of the housing (1);
wherein the shutter (5) is provided with a first elastic resetting member and the slider (6) is provided with a second elastic resetting member, the shutter (5) and the slider (6) are mutually closed under action of the first elastic resetting member and the second elastic resetting member.

2. The LC dustproof adapter according to claim 1, wherein the shutter (5) is rotatably disposed in the socket (4) of the housing (1) through two rotating shafts (8) at two ends of the shutter (5), the first elastic resetting member comprises an inner spring piece (9) and a sealing cover (10), the inner spring piece (9) comprises an elastic piece installation plate (11), an elastic arm (12) integrally formed in a middle of the elastic piece installation plate (11), and an inner buckle (13) integrally formed on two respective sides of the elastic piece installation plate (11), the elastic piece installation plate (11) is installed on a small hanging table (35) of the housing (1) through the inner buckle (13), the elastic arm (12) presses a back surface of the shutter (5), the sealing cover (10) is installed outside the elastic piece installation plate (11), and the sealing cover (10) is connected to the housing (1) through two outer buckles (14) at two sides.

3. The LC dustproof adapter according to claim 1, wherein the slider (5) is slidably disposed in two first guide rail grooves (16) at a top of the socket (4) of the housing (10 through two first guide rails (15) integrally formed at two sides of the slider (6), the second elastic resetting member is a spring (17), and the second elastic resetting member abuts against a rear end of the slider (6).

4. The LC dustproof adapter according to claim 1, wherein a clip (18, 19, 40, 50) is disposed on outer side of the housing (1), the clip (18, 19, 40, 50) comprises a first elastic claw (20), a second elastic claw (21) and a third elastic claw (22) arranged in a triangular shape, the first elastic claw (20) and the second elastic claw (21) are arranged side by side, an end portion of the first elastic claw (20) is bent to form a first positioning portion (23) and an end portion of the second elastic claw (21) is bent to form a second positioning portion (24).

5. The LC dustproof adapter according to claim 1, wherein a middle of the shutter (5) defines an arc concave surface (501).

6. The LC dustproof adapter according to claim 1, wherein the housing (1) forms a duplex adapter, a quad adapter, a sextuplex adapter, an octuplex adapter or a dozen adapter.

7. The LC dustproof adapter according to claim 1, wherein the bushing (2) comprises a first bushing (201) and a second bushing (202), the first bushing (201) is integrally molded into the housing (1), the second bushing (202) is integrally molded into a front end of a partition plate (25), and the partition plate (25) is inserted into the inner cavity of the housing (1) and divides the inner cavity of the housing (1) into two sockets (4).

8. The LC dustproof adapter according to claim 7, wherein two ends of the partition plate (5) are provided with a second guide rail (26) and a third guide rail (27), the second guide rail (26) and the third guide rail (27) are respectively inserted into a second guide rail groove (28) and a third guide rail groove (29) of the inner cavity of the housing (1), each of the second guide rail (26) and the third guide rail (27) is provided with a hook (30), and each of the second guide rail groove (28) and the third guide rail groove (29) is provided with a hanging groove (31), and the hanging groove (31) is hung on the hook (30).

9. The LC dustproof adapter according to claim 8, wherein two positioning blocks (32) are respectively disposed on two sides of an upper end of the partition plate (25), and the inner cavity of the housing (1) further defines two positioning grooves (33), the two positioning grooves (33) respectively cooperate with the two positioning blocks (32).

10. The LC dustproof adapter according to claim 9, wherein each of the partition plate (25) and the slider (6) both define an installation hole (34).

11. The LC dustproof adapter according to claim 1, wherein the slider (6) comprises a base (61) and a cylinder (62), the base (61) defines an accommodate groove (63), at least a part of the cylinder (62) is installed in the accommodate groove (63), and a first end of the cylinder (62) is fixedly connected to an inner side of one end of the base (61); the slider (6) is slidably disposed in two first guide rail grooves (16) at a top of the socket (4) of the housing (1) through two first guide rails (150 integrally formed on two respective sides of the slider (6).

12. The LC dustproof adapter according to claim 11, wherein the bushing (2) comprises a first bushing (201) and a second bushing (202), the first bushing (201) is integrally molded into the housing (1), the second bushing (201) is integrally molded into a front end of a partition plate (25), and the partition plate (25) is inserted into the inner cavity of the housing (1) and divides the inner cavity of the housing (1) into two sockets (4), an upper portion of the second bushing (202) is provided with two limit portions (203), the two limit portions (203) are respectively located on two sides of the partition plate (25), and the two limit portions (203) are respectively connected to two sides of the partition plate (25).

13. The LC dustproof adapter according to claim 12, wherein each of the two limit portions (203) defines a slide groove (204), a second end of the cylinder (62) is accommodated in the slide groove (204), and the cylinder (62) is slidable in the slide groove (204).
